# EUROPEAN PATENT SPECIFICATION

(11) **EP 1 670 599 B1**
(45) Date of publication and mention of the grant of the patent: **01.07.2009**
(21) Application number: 04794181.0
(22) Date of filing: 05.10.2004
(51) Int. Cl.: B21B 31/07, F16J 15/32

(54) **NECK SEAL FOR ROLLING MILL OIL FILM BEARING**
ZAPFENDICHTUNG FÜR WALZWERKÖLFILMLAGER
MANCHON POUR PALIER A FILM D'HUILE POUR LAMINOIR

(30) Priority: 07.10.2003 US 509214 P; 04.10.2004 US 957873
(43) Date of publication of application: 21.06.2006
(73) Proprietor: MORGAN CONSTRUCTION COMPANY, Worcester Massachusetts 01605 (US)
(72) Inventor: ARMOUR, James, Surrey GU21 2DG (GB); SCOTT, David, Edwin, Surrey GU21 4NR (GB); PUSEY, Tony, Surrey GU21 450 (GB)
(74) Representative: Capré, Didier
(86) International application number: PCT/US2004/032740
(87) International publication number: WO 2005/037455

(56) References cited:
- EP-A- 0 297 323
- EP-A- 1 136 142
- US-A1- 2002 084 594
- PATENT ABSTRACTS OF JAPAN vol. 2000, no. 04, 31 August 2000 (2000-08-31) -& JP 2000 024709 A (NIPPON STEEL CORP), 25 January 2000 (2000-01-25)

## Description

### BACKGROUND OF THE INVENTION

### 1. Field of the Invention

The invention relates to a seal according to the preamble of claim 1 and 3. This invention relates generally to flexible and resilient elastomeric seals, and is concerned in particular with an improvement to seals of the type employed on the tapered sections of roll necks journalled for rotation in rolling mill oil film bearings.

### 2. Description of the Prior Art

A seal in accordance with the preambles of claim 1 and claim 3 is known from JP 2000024709 A.

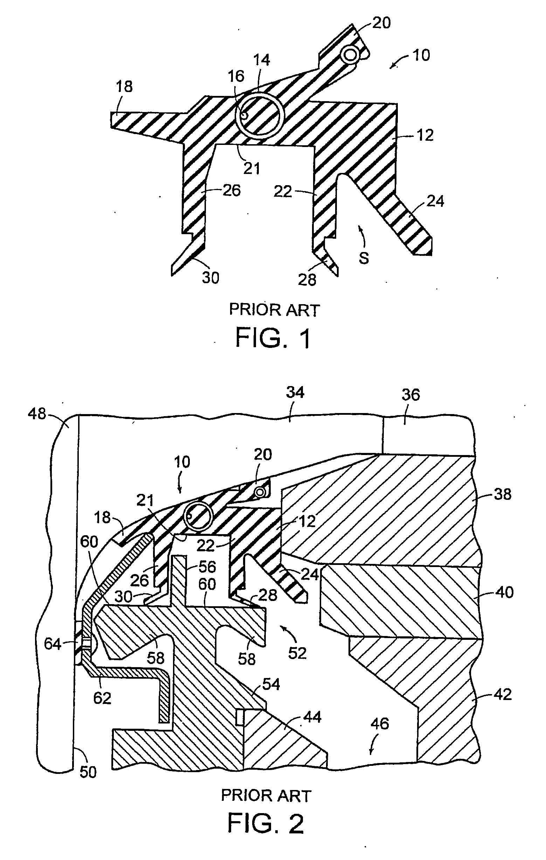

FIG. 1 illustrates a prior art neck seal 10 of the type described in U.S. Pat. No. 4,586,720 (Simmons et al.). The seal is molded of a flexible resilient elastomer and has a circular seal body 12 internally reinforced by an embedded combination of a coiled spring 14 and a steel cable 16. The seal body has oppositely protruding water-side and oil-side lips 18, 20, a cylindrical outer surface 21 delimited at one end by an oil-side flange 22 adjacent to another second oil-side flange 24 commonly referred to as a "flinger", and a water-side flange 26 delimiting the opposite end of surface 21.

The flanges 22, 26 are provided respectively with angularly disposed peripheral lips 28, 30. The lip 28 projects from flange 22 in the direction of the flinger flange 24, which in turn projects in the same direction at an angle with respect to flange 22 to define a space "S" therebetween open to the surrounding atmosphere.

As shown in FIG. 2, the seal 10 is adapted to be mounted on the tapered section 34 of a rolling mill roll neck 36 which in turn is rotatably supported in an oil film bearing. The bearing includes a sleeve 38 fixed to the roll neck by conventional means (not shown) for rotation therewith. The sleeve 38 has an outer cylindrical bearing surface which is journalled for rotation within an interior bearing surface of a fixed bushing 40. The bushing is carried in a bearing chock 42.

The sleeve rotates with the roll neck while the bearing chock and the bushing remain stationary. Highly viscous oil is fed continuously between the bearing surfaces of the sleeve 38 and bushing 40. A circular extension 44 of the bearing chock provides a sump 46 in which the oil emerging from between the bearing surfaces is continuously collected. The oil is drawn away from the sump through a suitable piping connection (not shown) to be cooled and filtered before being recycled back to the bearing surfaces.

Where the roll is operating under "wet" conditions, water is constantly flooding over the roll barrel 48 and down over its end face 50. In spite of the centrifugal forces which tend to throw the water off of the roll, some of the water tends to work its way along the roll neck in the direction of the bearing. The objective of the seal assembly generally indicated at 52 and the flexible neck seal 10 which forms a component part thereof is to prevent any of the water from infiltrating into the bearing and contaminating the bearing oil while at the same time preventing loss of oil from the bearing.

In addition to the flexible seal 10, the seal assembly 52 includes a rigid circular seal end plate 54 which is mounted on and fixed relative to the circular extension 44 of the bearing chock 42. The seal end plate has a radially inwardly extending rigid circular flange or "dam" 56 which is perpendicular to the bearing axis. The inner edge of the dam is spaced radially from the cylindrical outer surface 21 of the flexible seal body. The seal end plate further includes shoulders 58 extending in opposite directions from the base of the dam 56. Each of the shoulders 58 has a cylindrical shoulder surface 60 which is parallel to the bearing axis. The cylindrical shoulder surfaces 60 surround the flexible seal flanges 22, 26, and are arranged to be slidingly contacted by their respective flexible lips 28, 30.

The seal assembly 52 also includes an inner seal ring 62 with resilient buttons 64 engaging the end face 50 of the roll. The inner edge of the inner seal ring contacts the flexible seal body 12 at the juncture of the lip 18 and flange 26.

During a rolling operation, the above-described arrangement will operate in the following manner, the inner seal ring 62, flexible neck seal 10 and sleeve 38 will rotate with the roll neck. The seal end plate 54, chock 42 and bushing 40 will remain stationary.

Lubricating oil will constantly flow from between the bearing surfaces of the sleeve 38 and bushing 40. Most of this oil will be turned back by the flinger 24 on the neck seal and will thus be directed to the sump 46. Oil which succeeds in passing by the flinger 24 will be turned back by the rotation oil-side flange 22 and will be prevented from escaping between the flange 22 and the shoulder surface 60 by the flexible lip 28 which sealingly engages the shoulder surface. Likewise, the major portion of the water applied to the roll will be turned back by the rotating inner seal ring 62. Any water which succeeds in passing by the inner seal ring will be turned back by the rotating water-side flange 26 on the neck seal and will be prevented from passing between the flange and its surrounding shoulder surface by the flexible lip 30.

Experience has shown that there are a number of disadvantages associated with the above-described prior art neck seal 10. These include:
1) The wide contact profile between the sealing lips 28, 30 and the seal end plate does not allow a true hydrodynamic fluid film to be established at the dynamic interface. This leads to a poor lubrication regime and high wear rates.
2) The thin flexible sealing lips offer little resistance to abrasive wear.
3) The thin flexible sealing lips are prone to high temperature plastic set, reducing sealing contact stresses and limiting the response of the lip to applied roll offset.

It is the object of the present invention to solve those promblems. This object is achieved by the subject matter of claims 1 and 3.

### SUMMARY OF THE INVENTION

The invention differs fundamentally from traditional roll neck seals in the design philosophy of the oil-side and water-side flanges and their respective sealing lips. These lips, extending to the outer diameter of the component, are designed to act in concert with hinges incorporated into the flanges such that a hydrodynamic fluid film is established between the sealing lips and the surfaces of the seal end plate with which they are in contact under all possible radial roll offset conditions. The fluid film provides a dynamic barrier to the passage of media from the fluid side to the air side, effectively pumping the medium continuously back to the fluid side.

Other features and advantages of the present invention will now be described in greater detail with reference to the accompanying drawings, wherein:

### BRIEF DESCRIPTION OF THE DRAWINGS

Figure 1 is a sectional view through a conventional seal;
Figure 2 is a sectional view through an oil film bearing incorporating the seal shown in Figure 1;
Figure 3 is a sectional view through a seal in accordance with the present invention;
Figure 4 is a partial sectional view showing the seal of Figure 3 installed in an oil film bearing assembly.

### DETAILED DESCRIPTION OF PREFERRED EMBODIMENT

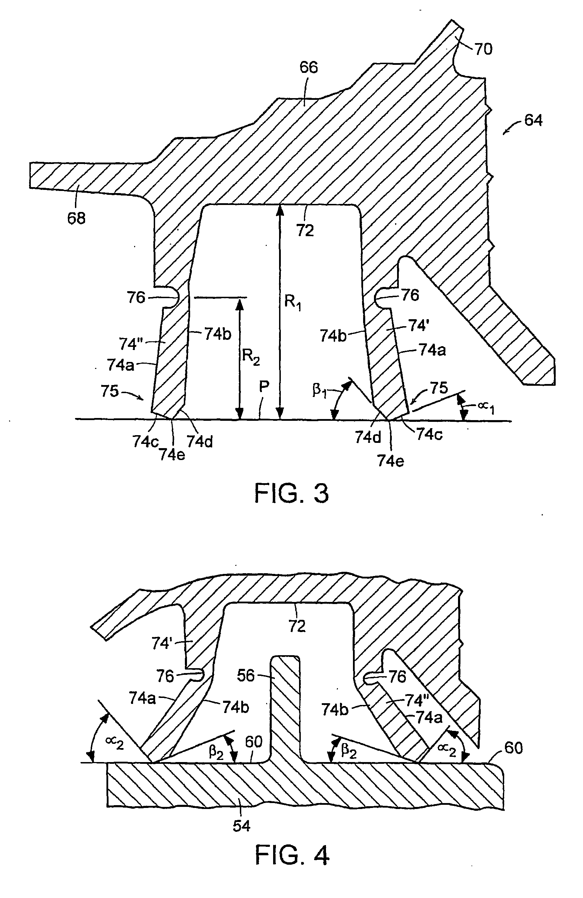

With reference to Figure 3, a seal 64 in accordance with the present invention is again molded of a flexible resilient elastomer and has a circular body 66 with oppositely protruding water-side and oil-side lips 68, 70, and a cylindrical outer surface 72. Surface 72 is delimited at at least one end by an oil side flange 74', and is preferably delimited at the opposite end by a water-side flange 74". The flanges 74', 74" each have first sides 74a which in use are exposed to liquids (oil or water), and second sides 74b which confront one another and which in use are exposed to air in the axial gap between the flanges 74', 74". The first and second flange sides terminate respectively at beveled first and second faces 74c, 74d that converge at outer edges 74e to form sealing lips 75. When the seal is in an unstressed state, i.e., not axially mounted on a roll neck or radially confined by a seal end plate, the outer edges 74e are located in a reference plane "P" parallel to and spaced from surface 72 by a radial distance R₁. In the unstressed state, the beveled faces 74c, 74d respectively form contact angles ά₁, β₁, with the reference plane P.

The flanges 74', 74" are additionally provided with hinges 76, preferably configured as grooves in the first sides 74a. The hinges 76 are spaced from the reference plane P by a radial distance R₂.

When the seal 64 is installed in a bearing assembly, as shown in Figure 4, the flanges 74', 74" are radially confined by the shoulder surfaces 60 of the seal end plate 54. This causes the flanges to deflect about the hinges 76, which in turn results in changed contact angles ά₂, β₂ between the faces 74c, 74d and the shoulder surfaces 60.

In order to insure that a hydrodynamic fluid film is maintained between the sealing lips 75 and the shoulder surfaces 60 when the seal is installed and functioning in a bearing assembly, it has been determined that the contact angle ά₂ must be about 35° to 60°, and the contact angle β₂ must be about 12° to 35°.

In order to achieve this objective, when the seal is in an unstressed state as depicted in Figure 3, a critical synergistic relationship is required between the radial distance R₂ and the contact angles ά₁, β₁. More particularly, it has been determined that that ά₁, should be about 15° to 30°, β₁ should be about 40° to 60°, and R₂ should be about 0.4 to 0.7 times R₁.

By incorporating these features into the neck seal, the following advantages are realized:
1) Sealing effectiveness is increased due to the establishment and sustaining of a hydrodynamic fluid film between the edges 74e of the sealing lips 75 and the seal end plate.
2) Seal lip wear is reduced through an improved lubrication regime at the sealing edges.
3) Seal life is extended through a robust lip geometry.
4) The positioning and resilience of the hinges 76 will reduce the risk of plastic lip set and the associated loss in roll offset accommodation.

In light of the foregoing, it will be understood by those skilled in the art that various changes and modifications may be made to the disclosed embodiment without departing from the spirit of the invention or the scope of the appended claims. By way of example only, for so-called "dry" bearing installations where cooling water is not applied to the rolls, a seal could be provided with only one oil side flange. The flange hinges may be configured differently, as may other features of the seal body.

## Claims

1. A seal (64) for use on the tapered section (34) of a roll neck (36) in a rolling mill, comprising:
a flexible circular seal body (66) having a cylindrical outer surface (72) delimited at at least one end by a radially outwardly extending flange (74', 74"), said flange having first and second sides (74a, 74b) terminating respectively at beveled first and second faces (74c, 74d) that converge at an outer edge (74e);
**characterized by**:
- the first face (74c) forming an angle of 15°-30° with respect to the reference plane in an unstressed state;
- the second face (74d) forming an angle of 40°-60° with respect to the reference plane in an unstressed state;
- a hinge (76) in said flange (74', 74"), the radial distance between said hinge (76) and a reference plane parallel to said cylindrical outer surface (72) and containing said outer edge (74e) being about 0.4 to 0.7 times the radial distance between said reference plane and said cylindrical outer surface (72) in an unstressed state.

2. The seal of claim 1 wherein said cylindrical outer surface (72) is delimited by the second side (74b) of said flange (74', 74"), and wherein said hinge is configured as a groove in the first side (74a) of said flange.

3. A seal (64) for use on a tapered section (34) of a roll neck (36) in a rolling mill, said seal comprising:
a flexible circular seal body (66) having a cylindrical outer surface (72) delimited at opposite ends by radially outwardly extending flanges (74', 74"), said flanges having oppositely facing first sides (74a) and confronting second sides (74b), said first and second sides terminating respectively at angled first and second faces (74c, 74d) that converge at outer edges (74e) **characterized by**:
grooves in the first sides (74a) of said flanges (74', 74"), the radial distances between said grooves and a reference plane parallel to said cylindrical outer surface (72) and containing said outer edges (74e) being about 0.4 to 0.7 times the radial distance between said reference plane and said cylindrical outer surface (72) in an unstressed state, said first faces (74c) forming angles of about 15° to 30° and said second faces (74d) forming angles of about 40° to 60° with said reference plane in an unstressed state.

## Patentansprüche

1. Dichtung (64) zur Verwendung an dem konischen Abschnitt (34) eines Walzenzapfens (36) in einem Walzwerk,
welche folgendes umfasst:
einen flexiblen kreisförmigen Dichtungskörper (66), welcher eine zylinderförmige Außenfläche (72) aufweist, die an mindestens einem Ende durch einen sich radial nach außen erstreckenden Flansch (74', 74'') begrenzt wird, wobei der besagte Flansch eine erste und eine zweite Seite (74a, 74b) besitzt, welche jeweils an einer abgeschrägten ersten bzw. zweiten Stirnfläche (74c, 74d) enden, die an einem Außenrand (74e) zusammenlaufen,
**dadurch gekennzeichnet, dass**
- die erste Stirnfläche (74c) in einem unbelasteten Zustand einen Winkel von 15° - 30° bezogen auf die Bezugsebene bildet;
- die zweite Stirnfläche (74d) in einem unbelasteten Zustand einen Winkel von 40° - 60° bezogen auf die Bezugsebene bildet;
- ein Scharnier (76) in dem besagten Flansch (74', 74''), wobei die radiale Distanz zwischen dem besagten Scharnier (76) und einer Bezugsebene, welche parallel zu der besagten zylinderförmigen Außenfläche (72) verläuft und den besagten Außenrand (74e) umfasst, etwa 0,4 bis 0,7 mal der radialen Distanz zwischen der besagten Bezugsebene und der besagten zylinderförmigen Außenfläche (72) in einem unbelasteten Zustand entspricht.

2. Dichtung gemäß Anspruch 1, wobei die besagte zylinderförmige Außenfläche (72) durch die zweite Seite (74b) des besagten Flanschs (74', 74") begrenzt wird und wobei das besagte Scharnier als eine Auskehlung in der ersten Seite (74a) des besagten Flanschs ausgebildet ist.

3. Dichtung (64) zur Verwendung an einem konischen Abschnitt (34) eines Walzenzapfens (36) in einem Walzwerk, wobei die besagte Dichtung folgendes umfasst:
einen flexiblen kreisförmigen Dichtungskörper (66), welcher eine zylinderförmige Außenfläche (72) aufweist, die an entgegengesetzten Enden durch sich radial nach außen erstreckende Flansche (74', 74") begrenzt wird, wobei die besagten Flansche in entgegengesetzte Richtungen weisende erste Seiten (74a) und einander gegenüberliegende zweite Seiten (74b) besitzen, wobei die ersten und zweiten Seiten jeweils an abgewinkelten ersten bzw. zweiten Stirnflächen (74c, 74d) enden, die an Außenrändern (74e) zusammenlaufen, **gekennzeichnet durch**:
Auskehlungen in den ersten Seiten (74a) der besagten Flansche (74', 74''), wobei die radialen Distanzen zwischen den besagten Auskehlungen und einer Bezugsebene, welche parallel zu der besagten zylinderförmigen Außenfläche (72) verläuft und die besagten Außenränder (74e) umfasst, etwa 0,4 bis 0,7 mal der radialen Distanz zwischen der besagten Bezugsebene und der besagten zylinderförmigen Außenfläche (72) in einem unbelasteten Zustand entspricht, wobei in einem unbelasteten Zustand die besagten ersten Stirnflächen (74c) Winkel von ungefähr 15° bis 30° und die besagten zweiten Stirnflächen (74d) Winkel von ungefähr 40° bis 60° zu der besagten Bezugsebene bilden.

## Revendications

1. Joint ( 64 ) à utiliser sur la section ( 34 ) conique d'un col ( 36 ) de cylindre d'un laminoir,
comprenant :
un corps ( 66 ) flexible circulaire de joint ayant une surface ( 72 ) cylindrique extérieure délimitée à au moins une extrémité par un rebord ( 74', 74" ) s'étendant radialement vers l'extérieur, le rebord ayant des premier et deuxième côtés ( 74a, 74b ) se terminant respectivement à des première et deuxième faces ( 74c, 74d ) biseautées qui convergent en un bord ( 74^{e} ) extérieur,
**caractérisé par** :
- la première face ( 74c ) faisant un angle de 15° à 30° avec le plan de référence à l'état non contraint,
- la deuxième face ( 74d ) faisant un angle de 40° à 60° par rapport au plan de référence à l'état non contraint,
- une charnière ( 76 ) dans le rebord ( 74', 74" ), la distance radiale entre la charnière ( 76 ) et un plan de référence parallèle à la surface ( 72 ) cylindrique extérieure et passant par le bord ( 74a ) extérieur représentant environ de 0,4 à 0,7 fois la distance radiale entre le plan de référence et la surface ( 72 ) cylindrique extérieure à l'état non contraint.

2. Joint suivant la revendication 1, dans lequel la surface ( 72 ) cylindrique extérieure est délimitée par le deuxième côté ( 74b ) du rebord ( 74', 74" ) et la charnière est configurée sous la forme d'une rainure dans le premier côté ( 74a ) du rebord.

3. Joint ( 64 ) à utiliser sur une section ( 34 ) conique d'un col ( 36 ) de cylindre d'un laminoir, le joint comprenant :
un corps ( 66 ) flexible circulaire de joint ayant une surface ( 72 ) cylindrique extérieure délimitée à des extrémités opposées par des rebords ( 74', 74" ) s'étendant radialement vers l'extérieur, ces rebords ayant des premiers côtés ( 74a ) se faisant face de manière opposée et des deuxièmes côtés ( 74b ) en confrontation, les premier et deuxième côtés se terminant respectivement à des première et deuxième faces ( 74c, 74d ) faisant un angle qui convergent en des bords ( 74e ) extérieurs,
**caractérisé par** :
- des rainures dans les premiers côtés ( 74a ) des rebords ( 74', 74" ), les distances radiales entre les rainures et un plan de référence parallèle à la surface ( 72 ) cylindrique extérieure et passant par les bords ( 74e ) extérieurs représentant de 0,4 à 0,7 fois la distance radiale entre le plan de référence et la surface ( 72 ) cylindrique extérieure à l'état non contraint, les premières faces ( 74c ) faisant des angles d'environ 15° à 30° et les deuxièmes faces ( 74d ) faisant des angles d'environ 40° à 60° avec le plan de référence à l'état non contraint.
